# EUROPÄISCHE PATENTSCHRIFT

(11) **EP 1 632 385 B1**
(45) Veröffentlichungstag und Bekanntmachung des Hinweises auf die Patenterteilung: **21.11.2007**
(21) Anmeldenummer: 04104219.3
(22) Anmeldetag: 02.09.2004
(51) Int. Cl.: B60K 37/02

(54) **Vorrichtung für ein Fahrzeug zur Anzeige des Zustands einer Energiequelle**
Device for indicating the status of an energy source
Dispositif pour indiquer l'etat d'une source d'energie

(43) Veröffentlichungstag der Anmeldung: 08.03.2006
(73) Patentinhaber: Ford Global Technologies, LLC, Dearborn, MI 48126 (US)
(72) Erfinder: Gaedt, Lutz, 52499, Baesweiler (DE); Spijker, Engbert, 6361 BR Nuth (NL); Karden, Eckhard, 52066, Aachen (DE); Jung, Holger, 52457 Aldenhoven (DE)
(74) Vertreter: Dörfler, Thomas

(56) Entgegenhaltungen:
- EP-A- 1 391 343
- DE-A- 10 138 170
- DE-A- 10 211 464
- US-B1- 6 542 146

## Beschreibung

Die Erfindung betrifft eine Vorrichtung für ein Personenkraftfahrzeug zur Anzeige des Zustands einer Batterie, mit einem Anzeigeinstrument gemäß dem Oberbegriff des Anspruchs 1.

Übliche Personenkraftfahrzeuge werden mittels eines Verbrennungsmotors oder eines Elektroantriebs angetrieben. Neuerdings ist auch der Antrieb mittels einer Kombination der zuvor genannten Antriebe bekannt. Solche Fahrzeuge werden als Hybridfahrzeuge bezeichnet. Bei niedriger Last bzw. Geschwindigkeit verwenden diese Fahrzeuge einen Elektroantrieb und bei hoher Belastung bzw. Geschwindigkeit wird auf Verbrennungsmotorbetrieb umgeschaltet.

Die Fahrzeuge weisen üblicherweise Anzeigen für die Fahrzeugfunktionen auf. Insbesondere umfassen sie in aller Regel Tachometer zur Anzeige der momentanen Geschwindigkeit und meist auch Drehzahlmesser zur Anzeige der Umdrehungszahl des Motors. Daneben ist es üblich, eine Vielzahl von Kontrollanzeigen und/oder Warnlampen vorzusehen, wie Treibstoffvorrats- oder Motoröltemperaturanzeigen.

All diese Fahrzeuge haben ferner gemeinsam, dass sie eine Batterie zur Bereitstellung elektrischer Spannung z. B. für den Betrieb eines Anlassers, der Bordelektronik, der Insassen-bezogenen Funktionen und gegebenenfalls des Fahrzeugmotors selbst aufweisen.

Insbesondere im letzteren Fall ist es notwendig, den Zustand der Batterie zu kennen bzw. dem Fahrer anzuzeigen, damit dieser die Batterie überwachen und bei Bedarf entsprechende Maßnahmen vornehmen kann.

Ist nämlich beispielsweise die in der Batterie zur Verfügung stehende Energiemenge, d. h. der Ladezustand zu gering, so treten, je nach Fahrzeugtyp, unterschiedliche unerwünschte Folgen auf.

So wäre bei einem mittels Verbrennungsmotor betriebenen Fahrzeug mit Anlasser und Lichtmaschine der Betrieb des Anlassers, der Bordelektronik usw. im Stillstand nicht oder nur kurz möglich. Die Batterie müsste also vor der Fahrt aufgeladen oder der Verbrennungsmotor des Fahrzeugs dürfte nicht abgestellt werden, um über die Lichtmaschine eine solche Aufladung vorzunehmen. Da jedoch solche Fahrzeuge üblicherweise ein Laden der Batterie mit der integrierten Lichtmaschine während der Fahrt erlauben, weisen sie lediglich eine Batteriewarnlampe auf. Diese erlaubt jedoch keine genaue Überwachung der Batterie. So kommt es vor, dass die Batterie zum Anlassen des Motors nicht genügend Leistung zur Verfügung stellen kann.

Bei einem reinen Elektrofahrzeug könnte es bei zu geringer Batterieladung sogar zum Stillstand des Fahrzeugs oder Einschränkungen im Fahrbetrieb, z. B. kleinere Höchstgeschwindigkeit oder ungenügende Reserven mitten im Überholvorgang, kommen. Diese Fahrzeuge weisen daher separate Anzeigen für den Zustand der Batterie auf. Bekannt sind Anzeigen für den Ladezustand, die Temperatur, der Spannung usw.

Bei einem Hybridfahrzeug müsste bei nicht ausreichender Ladung der Batterie auf den Verbrennungsbetrieb umgeschaltet und die Batterie ggf. mittels der Lichtmaschine geladen werden. Daher weisen diese Fahrzeuge ebenfalls Warnleuchten oder die soeben genannten Zustandsanzeigen auf.

Allerdings benötigen diese zusätzlichen Anzeigen Platz im Armaturenbrett, zusätzliche Systeme, Anschlüsse usw. Ferner wird das Blickfeld des Fahrers durch die weiteren Instrumente in ergonomisch ungünstiger Weise beeinträchtigt. Sein Blickfeld ist z. B. durch die vielen Anzeigen "voll gestopft". Auch müssen je nach Fahrzeugtyp unterschiedliche Einbaugeräte und Anzeigen für das Armaturenbrett bevorratet und hergestellt werden.

Daneben ist es bekannt, Fahrzeuge im Start/Stoppmodus zu betreiben, um den Benzinverbrauch zu verringern und die Umwelt durch Verringerung der Emissionen zu schonen. Dazu wird der Motor in geeigneten Fällen kurzfristig ausgeschaltet und erst bei Bedarf wieder angelassen. So wird der Motor des Fahrzeugs im Stillstand bei ausgekuppelter Kupplung abgeschaltet und erst beim Anfahren, also beim Betätigen der Kupplung und Treten des Pedals für die Motorleistung, eingeschaltet. Ein ähnlicher Betriebsmodus wird bei den Hybridfahrzeugen verwendet. Das Fahrzeug fährt also bei geringen Geschwindigkeiten zunächst nur elektrisch angetrieben. Erst bei der Notwendigkeit einer höheren Leistung wird ein Verbrennungsmotor zu- bzw. angeschaltet. Im Stillstand sind beide Antriebe völlig abgeschaltet.

Idealerweise sollten alle Insassen-bezogenen Funktionen des Fahrzeugs, wie Sitzheizung, Klimaanlage usw., trotz des Start/Stoppbetriebsmodus zur Verfügung stehen und die Insassen bzw. der Fahrer eines solchen Fahrzeugs nicht bemerken, dass sein Fahrzeug im Start/Stoppmodus betrieben wird, d. h. alle Funktionen stehen auch im Stoppmodus unverändert zur Verfügung. Daher besteht ein hoher elektrischer Leistungsbedarf, der von der Batterie zu decken ist.

Bei diesem Start/Stoppbetriebsmodus ist es daher extrem wichtig, den Zustand der Batterie zu Überwachen. Ansonsten könnten die oben bereits angegebenen unerwünschten Folgen auftreten.

Aus der gattungsbildenden US 6542146 ist eine Anzeigevorrichtung mit Anzeigeinstrumenten bekannt, bei der die Anzeigeinstrumente verschiedene Fahrzeugzustände anzeigen können. Die Anzeigeinstrumente weisen dabei einen beweglichen, mechanischen Skalenzeiger auf und eine Skala, die abhängig vom darzustellenden Zustand entsprechend skaliert wird, indem verschiedene Skalen aufleuchten. Die Anzeigeinstrumente können z. B. die Geschwindigkeit, den Ladezustand der Batterie, Himmelsrichtungen oder die Füllung des Tanks anzeigen. Der jeweilige dargestellte Zustand wird vom Fahrer ausgewählt.

Aufgabe der Erfindung ist es daher eine Vorrichtung für ein Personenkraftfahrzeug zur Anzeige des Zustands einer Batterie bereitzustellen, die ohne ergonomische Einschränkung die Überwachung des Zustands der Batterie ermöglicht und dabei eine einheitliche Gestaltung des Armaturenbretts ohne Änderungen für die verschiedenen Fahrzeugtypen erlaubt. Trotzdem sollten dem Fahrer alle notwendigen Informationen der üblichen Fahrzeugfunktionen unverändert erkennbar bleiben. Zudem sollte sich die Vorrichtung für die Verwendung im Start/Stoppmodus eignen und die Anzeige des Zustands der Batterie jederzeit ermöglichen.

Diese Aufgabe wird durch die in Anspruch 1 wiedergegebene Erfindung gelöst.

Dadurch, dass das Anzeigeinstrument ein Anzeigeinstrument zur Anzeige einer Fahrzeugfunktion ist, das nach geeigneter Ansteuerung den Zustand der Batterie anzeigt, ist es möglich, mit einer einzigen Anzeige durch gezielte Ansteuerung sowohl die üblichen Fahrzeugfunktionen als auch den Zustand der Batterie darzustellen. Je nach Wunsch bzw. Betriebszustand zeigt dieselbe Anzeige dann den Zustand der Batterie oder die übliche Fahrzeugfunktion an. Es sind also zur detaillierten Überwachung der Batterie keine zusätzlichen Anzeigen notwendig. Die Ergonomie des Armaturenbretts wird nicht durch eine Vielzahl von Anzeigen herabgesetzt und als weiterer Vorteil kann das Armaturenbrett unabhängig vom jeweiligen Fahrzeugtyp gleich ausgestaltet werden.

Insbesondere kann so die jeweils für den Zustand des Fahrzeugs wichtigste Information angezeigt werden. Während der Fahrt sind dies z. B. die Geschwindigkeit und die Umdrehungszahl. Im Stillstand, also bei Belastung der Batterie ist dies der Zustand der Batterie. Die Umschaltung kann automatisch, je nach Betriebsart des Fahrzeugs und/oder auch manuell auf Wunsch erfolgen.

Unter Fahrzeugfunktion werden die üblichen Fahrzeugfunktionen, wie Geschwindigkeit, Umdrehungszahl des Motors, Öltemperatur, Kraftstoffvorrat bzw. Tankinhalt usw. verstanden, die bei "normalen" PKW mit Verbrennungsmotor vorhanden sind.

Davon zu unterscheiden ist der Zustand der Energiequelle. Als Energiequelle wird nicht etwa Kraft- oder Treibstoff, wie Benzin oder Diesel für einen Verbrennungsmotor, sondern eine Quelle zur Versorgung des Fahrzeugs mit elektrischer Energie, also eine Batterie jeglicher Art, angesehen. Als Batterie wird vorzugsweise eine wiederaufladbare Batterie bzw. ein Akkumulator eingesetzt bzw. verstanden.

Die erfindungsgemäße Vorrichtung wird in einem Fahrzeug verwendet, das mit einer Start/Stoppmodus Funktionalität ausgestattet ist. In diesem Fall erfolgt die Umschaltung des Anzeigeinstruments vorzugsweise automatisch je nach Betriebsart des Fahrzeugs. Die Verwendung der erfindungsgemäßen Vorrichtung mit solchen Fahrzeugen ist besonders vorteilhaft, da diese eine starke Belastung der Batterie aufweisen, um im Stoppmodus alle Funktionen unverändert bereitzustellen, und der Start bzw. das Wiederanlassen des Motors gewährleistet sein muss.

Das Anzeigeinstrument zeigt also im Stoppmodus (Stillstand) vorzugsweise den Zustand der Batterie und im Startmodus (Fahrt) die Fahrzeugfunktion an.

Das Anzeigeinstrument kann neben dem oben beschriebenen eigentlichen Parametern für den Zustand der Batterie auch oder alternativ weitere Informationen im Zusammenhang mit der Start/Stoppmodus Funktionalität und der Batterie anzeigen. So ist die verbleibende Zeit bis zum notwendigen Start des Motors zur Verhinderung der Entladung der Batterie von Interesse und kann entsprechend angezeigt werden. So könnte wiederum bei Verwendung des Drehzahlmessers 1000 UPM einer maximalen Stillstandszeit (z. B. 200 sec) entsprechen und der Zeiger sich beim Ablauf dieser Zeit in Richtung 0 UPM bewegen, um die verbleibende Restdauer des Stillstands wiederzugeben. Beim Motorstart befände sich der Zeiger bei 0 UPM.

Auch hierbei kann ggf. die Anzeige durch die Verwendung einer Batteriewarnlampe und/oder eines akustischen Signals unterstützt werden, die z. B. den bevorstehenden Motorstart ankündigen.

Vorzugsweise handelt es sich bei dem Anzeigeinstrument um ein mechanisches Skalen-Anzeigeinstrument. Diese weisen eine beschriftete Skala und ggf. einen auf die Skala gerichteten Zeiger auf. Über die Skala kann der Zustand der Batterie bzw. die Fahrzeugfunktion abgelesen werden. Meist bewegt sich dazu der Zeiger gegenüber der Skala, wie dies z. B. bei Tachometern üblich ist.

Das Anzeigeinstrument kann etwa kreisförmiger Gestalt, also ein Rundinstrument sein. Eine andere Ausgestaltung, z. B. in Balkenform ist jedoch ebenfalls denkbar. Es können also zur Anzeige der Fahrzeugfunktion und des Zustandes der Batterie dem Fahrer geläufige, übliche Skalen-Anzeigeinstrumente verwendet werden.

Das Anzeigeinstrument ist in einer bevorzugten Ausgestaltung ein mechanisches Rundinstrument mit mindestens einer Skala und einem Zeiger, wie z. B. ein Tachometer, Drehzahlmeter oder ähnliches. Diese mechanischen Rundinstrumente sind ergonomisch besonders vorteilhaft und in allen Situation schnell abzulesen.

Je nach Ausgestaltung der Anzeige kann das Anzeigeinstrument eine Skala aufweisen, die sowohl zur Anzeige des Zustands der Batterie als auch der Fahrzeugfunktion dient. So wird während der Fahrt üblicherweise bei einem Drehzahlmesser die Umdrehungszahl (UPM) in Schritten von 1000 angezeigt. Um den Zustand der Batterie anzuzeigen, könnte dieselbe Skala ohne Änderung verwendet werden. So entspräche beispielsweise 1000 UPM 100 % Batterieladung und der Bereich zwischen 0 und 1000 UPM entsprechend 0 bis 100 % Batterieladung. Zur Anzeige des Zustandes der Batterie müsste lediglich der Zeiger des Drehzahlmessers in geeigneter Weise angesteuert werden, um die gemessene Batterieladung wiederzugeben.

Möglich ist es aber auch, dass das Anzeigeinstrument zwei Skalen aufweist, eine Skala für die Anzeige des Zustands der Batterie und eine Skala für die Fahrzeugfunktion. Die Skalen könnten nebeneinander, in einander greifend z. B. in unterschiedlichen Farben oder gegenüberliegend angeordnet sein. So könnte bei einem Rundinstrument eine Skala außerhalb des vom Zeiger beschriebenen Kreispfades angeordnet und die zweite innerhalb des Kreispfades angeordnet werden.

Auch die Verwendung von zwei Zeigern pro Instrument ist prinzipiell möglich, wie dies von Uhren bekannt ist.

Das Anzeigeinstrument kann alternativ eine veränderbare Skala aufweisen, die zur Anzeige des Zustands der Batterie oder der Fahrzeugfunktion umschaltbar ist. Die Skala an sich könnte also je nach Anzeigeparameter ein- und ausgeblendet bzw. verändert werden. Die Skala selbst könnte also eine veränderbare Anzeigetechnik, wie LCD's oder LED's usw. verwenden. Insbesondere der Zeiger sollte jedoch aus ergonomischen Gründen möglichst konventionell ausgestaltet sein.

Das Anzeigeinstrument sollte also bei geeigneter Ansteuerung den Zustand der Batterie anzeigen. Als wichtige Größe zur Anzeige für den Zustand der Batterie kann z. B. die Qualität anzeigt werden.

Die Qualität einer Batterie setzt sich aus mehreren Größen zusammen. So kommen als Einzelgrößen der Ladezustand, die Zahl der Aufladungsvorgänge, der Kurzschlussstrom, die Temperatur, die Spannung, die als "Memoryeffekt" bekannte Alterung der Batterie, also maximale Kapazität usw. zur Auswertung.

Als wichtige Einzelgröße kommt insbesondere der Ladezustand der Batterie vorzugsweise zur Anzeige.

Auch die gleichzeitige parallele oder abwechselnde Anzeige mehrerer Parameter, die den Zustand der Batterie erkennen lassen, ist möglich.

Durch gezielte Steuerung des Anzeigeinstruments können weitere Zustände bzw. Parameter oder deren Höhe im selben Instrument sichtbar gemacht werden. So könnte durch eine oszillierende Bewegung des Zeigers im oben beschriebenen Fall zwischen 0 und 1000 UPM, eine Erniedrigung der Qualität der Batterie auf ein beachtenswertes Niveau, z. B unter 50 % in einer Weise angezeigt werden, die der Fahrer nicht übersehen kann.

Diese Anzeige bestimmter, besonders beachtenswerter und ggf. gefährlicher Zustände kann noch durch die Verwendung einer Batteriewarnlampe und/oder eines akustischen Signals unterstützt werden. So könnte bei einem Batteriefehler die Batteriewarnlampe aufleuchten und ggf. ein akustisches Warnsignal ertönen, so dass der Fahrer unverzüglich die nächste Werkstatt aufsucht.

Zur Ansteuerung des Anzeigeinstruments muss keine gesonderte Elektronik vorgesehen sein, sondern sie kann mittels der bereits vorhandenen Fahrzeugelektronik, z. B. durch geeignete Programmierung und ggf. Verdrahtung des Mikrokontrollers erfolgen.

Die erfindungsgemäße Vorrichtung kann bei Elektro-, Hybrid- oder Verbrennungsmotor-Fahrzeugen eingesetzt werden. Besonders bevorzugt ist der Einsatz in Hybrid-Fahrzeugen.

Weitere Merkmale, Einzelheiten und Vorteile der Erfindung ergeben sich aus der nachfolgenden Beschreibung der Zeichnung. Es zeigen:
- Fig. 1: eine schematische Ansicht einer ersten Ausführungsform einer erfindungsgemäßen Vorrichtung zur Anzeige der Qualität einer Batterie;
- Fig. 2: eine schematische Ansicht einer weiteren Ausführungsform einer erfindungsgemäßen Vorrichtung zur Anzeige der Ladung einer Batterie und der verbleibenden Motorstillstandszeit.

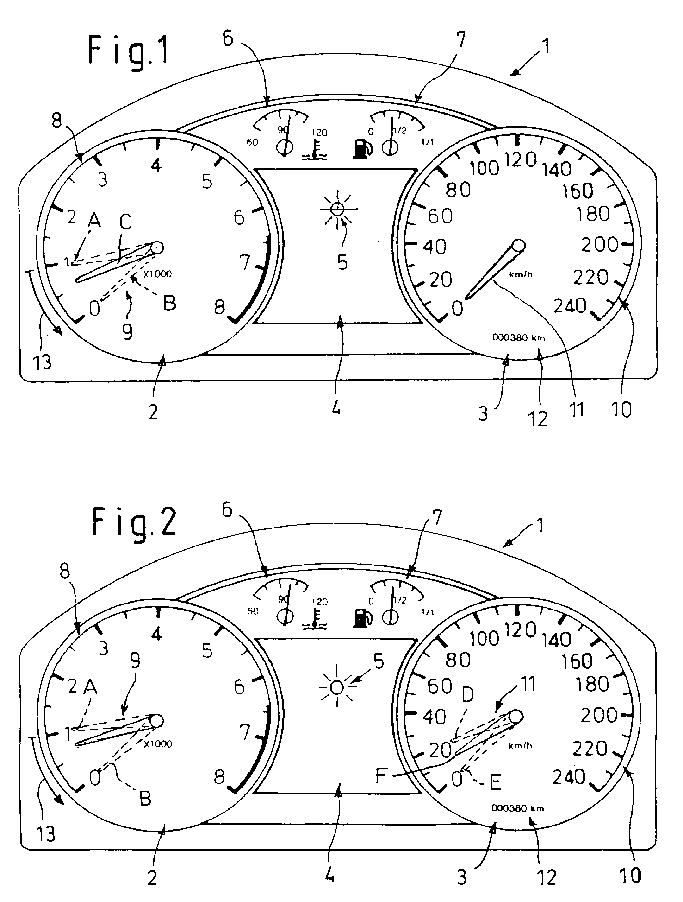

Figur 1 zeigt schematisch eine Baugruppe 1 für ein Armaturenbrett eines Fahrzeugs mit einem Drehzahlmesser 2 auf der linken Seite und einem Tachometer 3 auf der rechten Seite. Dazwischen ist ein Anzeigefeld 4 für Kontroll- und Warnleuchten, wie eine Batteriewarnlampe 5 angeordnet. Oberhalb des Feldes 4 befindet sich linker Hand eine Öltemperaturanzeige 6 und rechter Hand eine Kraftstoffvorratsanzeige 7.

Der Drehzahlmesser 2 ist als ein etwa einen Dreiviertelkreis beschreibendes Rundinstrument mit einer Skala 8 auf dem von einem Zeiger 9 beschriebenen Kreispfad ausgeführt. Die Einteilung der Skala 8 ist über ihren gesamten Bereich gleichmäßig und die Umdrehungszahl (UPM) des Motors in Einheiten von Tausend Umdrehungen pro Minute angegeben.

Der Tachometer 3 ist ebenfalls als ein etwa einen Dreiviertelkreis beschreibendes Rundinstrument mit einer Skala 10 auf dem von einem Zeiger 11 beschriebenen Kreispfad ausgeführt. Die Einteilung der Skala 10 ist ebenfalls über ihren gesamten Bereich gleichmäßig und die Geschwindigkeit in Einheiten von Kilometer pro Stunde angegeben. Zusätzlich weist der Tachometer 3 einen Kilometerzähler 12 auf.

Das nicht dargestellte Fahrzeug ist mit einer Start/Stoppmodus Funktionalität ausgerüstet und befindet sich, wie sich aus der Position des Zeigers 11 des Tachometers 3 ergibt, im Stillstand, d. h. seine Geschwindigkeit beträgt 0 km/h. Der Motor ist also abgeschaltet, der Drehzahlmesser 2 zur Anzeige des Zustands der Fahrzeugbatterie umgeschaltet und zeigt daher nicht 0 UPM an.

In dem in Fig. 1 dargestellten Fall wird die Qualität der Batterie in Prozent angezeigt, wozu der Drehzahlmesser 2 mit seiner Skala 8 ohne Änderung Verwendung findet. Es wird also lediglich der Zeiger 9 über die Fahrzeugelektronik bzw. das Motorsteuergerät abweichend vom normalen Fahrbetrieb derart angesteuert, dass er die Batterieeigenschaften und nicht mehr die Drehzahl des Motors anzeigt.

Der Zeiger 9 wird dazu so angesteuert, dass 1000 UPM 100 % Qualität der Batterie entsprechen. Diese Position des gestrichelt dargestellten Zeigers ist in Figur 1 mit A bezeichnet. Entsprechend sind 0 UPM mit 0 % Qualität der Batterie gleichzusetzen. Diese Position des gestrichelt dargestellten Zeigers ist in Figur 1 mit B bezeichnet

Der Zeiger 9 wird sich bei Abnahme der Qualität der Batterie von der Position A in Richtung des Pfeils 13 gegen den Uhrzeigersinn bewegen und dabei die Position C einnehmen bzw. durchlaufen, die im dargestellten Fall einer Qualität von ca. 70 % entspricht.

Der Zeiger 9 zeigt also nach Umschaltung auf die Anzeige der Batteriequalität auf den prozentualen Wert der Qualität und erlaubt dem Fahrer so die Überwachung der Batterie. Die Umschaltung findet in vorliegenden Fall automatisch mit dem Beginn des Stoppmodus statt. Es können jedoch Schalter vorgesehen sein, die eine manuelle Umschaltung auch während der Fahrt bzw. jederzeit erlauben.

Der Drehzahlmesser 2 würde im Leerlauf des Motors üblicherweise eine Umdrehungszahl des Motors im Bereich von 800 bis 1000 UPM anzeigen. Die Qualität der Batterie liegt im Normalfall im Bereich von 70 bis 90 % (Position C), so dass sich die Position des Zeigers 9 des Drehzahlmessers 2 im Stoppmodus nicht oder nur geringfügig gegenüber dem Startmodus mit laufendem Motor ändert. Somit merkt der Fahrer zunächst nicht, dass das Fahrzeug mit einer Start/Stoppmodus Funktionalität ausgerüstet ist.

Fällt die Qualität der Batterie unter ein bestimmtes vorgegebenes Niveau z. B. 50 % so oszilliert der Zeiger 9 zwischen den Positionen A und B mit einer Frequenz von ca. 1 Hz hin und her, so dass der Fahrer auf diesen Zustand der Batterie aufmerksam gemacht wird und ihm ein ggf. vorbestehender notwendiger Motorstart angekündigt wird.

Zusätzlich leuchtet die Batteriewarnlampe 5 im Anzeigenfeld 4 auf, wenn der Batteriezustand so kritisch wird, dass ein Werkstattbesuch zur Wartung bzw. Reparatur notwendig ist und der Motor nicht zur Einnahme des Stoppmodus abgeschaltet werden darf, da sonst ein Wieder-Anlassen für den Startmodus nicht möglich wäre. Die Anzeige dieses kritischen Zustands könnte noch durch ein akustisches Signal unterstützt werden.

Die Verwendung des Drehzahlmessers 2 wurde soeben im Zusammenhang mit Fig. 1 zur Anzeige der Qualität der Batterie des Fahrzeugs beschrieben. Eine Anzeige des Ladezustands der Batterie ist in gleicher Weise möglich. Dabei würde der Zeiger 9 lediglich den Ladezustand der Batterie in Prozent auf der Skala 8 zwischen 0 und 1000 UPM anzeigen. Auch ist eine wechselnde, zyklische Umschaltung der angezeigten Batterieparameter denkbar. Ferner könnte in entsprechender Weise der Ladezustand mittels des Tachometers parallel angezeigt werden.

In Figur 2 ist eine weitere Ausführungsform der erfindungsgemäßen Vorrichtung abgebildet. Diese entspricht weitestgehend der Ausführungsform aus Fig. 1, so dass dieselben Bezugszeichen für sich entsprechende Teile verwendet werden und lediglich auf die Unterschiede eingegangen wird.

Im Unterschied zum ersten Ausführungsbeispiel wird in dem in Fig. 2 dargestellten Beispiel mittels des Drehzahlmessers 2 der Ladezustand der Batterie angezeigt, wie dies oben bereits angedeutet wurde.

Als weiterer Unterschied wird der Tachometer 3 im Stoppmodus zur Anzeige der verbleibenden Zeit bis zu einem notwendigen Motorstart zur Erhaltung bzw. Wiederherstellung der Batterieladung verwendet.

Der Zeiger 11 wird dazu so angesteuert, dass z. B. 20 km/h einer maximalen Motorstillstandsdauer von 200 Sekunden entsprechen. Diese Position des gestrichelt dargestellten Zeigers 11 ist in Figur 2 mit D bezeichnet. Entsprechend sind 0 km/h mit 0 Sekunden verbleibender Motorstillstandsdauer gleichzusetzen, d. h. der Motorstart steht direkt bevor. Diese Position des gestrichelt dargestellten Zeigers ist in Figur 1 mit E bezeichnet.

Der Zeiger 11 wird sich bei Abnahme der verbleibenden Motorstillstandsdauer von der Position D gegen den Uhrzeigersinn bewegen und dabei die Position F einnehmen bzw. durchlaufen, die im dargestellten Fall einer Zeit von ca. 110 Sekunden entspricht.

Der Zeiger 11 zeigt also nach Umschaltung auf die Anzeige der Motorstillstandsdauer auf die verbleibende Dauer der Stillstandszeit des Motors. Die Umschaltung findet auch in vorliegenden Fall automatisch mit dem Beginn des Stoppmodus statt, da von diesem Zeitpunkt an die maximale Motorstillstandsdauer beginnt, wobei diese je nach Zustand der Batterie unterschiedlich ausfallen kann.

Als weiterer Unterschied leuchtet die Batteriewarnlampe 5 im Anzeigenfeld 4 auf, wenn der Batterieladezustand so gering wird, dass der Motor zur Erhaltung der Mindest-Ladung bzw. zur Aufladung der Batterie wieder gestartet werden muss. Dies ist z. B. bei längeren Stillstandszeiten der Fall, in denen die Batterie stark beansprucht wurde. Im normalen Start/Stoppmodus, d. h. beim Anfahren sollte die Lampe 5 jedoch nicht aufleuchten.

## Patentansprüche

1. Vorrichtung für ein Personenkraftfahrzeug zur Anzeige des Zustands einer Batterie, mit einem Anzeigeinstrument (2, 3) für den Zustand der Batterie, wobei das Anzeigeinstrument ein Anzeigeinstrument (2, 3) zur Anzeige einer Fahrzeugfunktion ist, das nach geeigneter Ansteuerung den Zustand der Batterie anzeigt,
**dadurch gekennzeichnet, dass**
das Fahrzeug mit einer Start/Stoppmodus Funktionalität ausgestattet ist und das Anzeigeinstrument (2) ausgebildet ist, im Stoppmodus den Zustand der Batterie und/oder die verbleibende Zeit bis zu einem notwendigen Motorstart zur Erhaltung oder Wiederherstellung der Batterieladung anzuzeigen.

2. Vorrichtung nach Anspruch 1,
**dadurch gekennzeichnet, dass**
das Anzeigeinstrument ein mechanisches Skalen-Anzeigeinstrument (2, 3) ist.

3. Vorrichtung nach Anspruch 1 oder 2,
**dadurch gekennzeichnet, dass**
das Anzeigeinstrument ein mechanisches Rundinstrument (2, 3) mit mindestens einer Skala (8, 10) und einem Zeiger (9, 11) ist.

4. Vorrichtung nach einem der vorhergehenden Ansprüche,
**dadurch gekennzeichnet, dass**
das Anzeigeinstrument ein Tachometer (3), Drehzahlmeter (2) oder ähnliches ist.

5. Vorrichtung nach einem der Ansprüche 2 bis 4,
**dadurch gekennzeichnet, dass**
das Anzeigeinstrument (2, 3) eine Skala (8, 10) aufweist, die sowohl zur Anzeige des Zustands der Batterie als auch der Fahrzeugfunktion dient.

6. Vorrichtung nach einem der Ansprüche 2 bis 4,
**dadurch gekennzeichnet, dass**
das Anzeigeinstrument zwei Skalen aufweist, eine Skala für die Anzeige des Zustands der Batterie und eine Skala für die Fahrzeugfunktion.

7. Vorrichtung nach einem der Ansprüche 2 bis 4,
**dadurch gekennzeichnet, dass**
das Anzeigeinstrument eine veränderbare Skala aufweist, die zur Anzeige des Zustands der Batterie oder der Fahrzeugfunktion umschaltbar ist.

8. Vorrichtung nach einem der vorhergehenden Ansprüche,
**dadurch gekennzeichnet, dass**
das Anzeigeinstrument (2) die Qualität der Batterie anzeigt.

9. Vorrichtung nach einem der vorhergehenden Ansprüche,
**dadurch gekennzeichnet, dass**
das Anzeigeinstrument (2) den Ladezustand der Batterie anzeigt.

10. Vorrichtung nach einem der vorhergehenden Ansprüche,
**dadurch gekennzeichnet, dass**
die Ansteuerung des Anzeigeinstruments mittels der Fahrzeugelektronik erfolgt.

11. Vorrichtung nach einem der vorhergehenden Ansprüche,
**dadurch gekennzeichnet, dass**
das Anzeigeinstrument (2, 3) im Startmodus die Fahrzeugfunktion anzeigt.

## Claims

1. Apparatus for passenger motor vehicles for displaying the state of a battery, comprising a display instrument (2, 3) for the state of the battery, with the display instrument being a display instrument (2, 3) for displaying a vehicle function, which display instrument displays the state of the battery after suitable actuation, **characterized in that** the vehicle is provided with a start/stop mode functionality and the display instrument (2) is designed to display, in the stop mode, the state of the battery and/or the time remaining until it is necessary to start the engine in order to maintain or re-establish charging of the battery.

2. Apparatus according to Claim 1, **characterized in that** the display instrument is a mechanical scale display instrument (2, 3).

3. Apparatus according to Claim 1 or 2, **characterized in that** the display instrument is a round mechanical instrument (2, 3) having at least one scale (8, 10) and a pointer (9, 11).

4. Apparatus according to one of the preceding claims, **characterized in that** the display instrument is a speedometer (3), rev counter (2) or the like.

5. Apparatus according to one of Claims 2 to 4, **characterized in that** the display instrument (2, 3) has a scale (8, 10) which is used both to display the state of the battery and the vehicle function.

6. Apparatus according to one of Claims 2 to 4, **characterized in that** the display instrument has two scales, one scale for displaying the state of the battery and one scale for the vehicle function.

7. Apparatus according to one of Claims 2 to 4, **characterized in that** the display instrument has a variable scale which can be changed over for the purpose of displaying the state of the battery or the vehicle function.

8. Apparatus according to one of the preceding claims, **characterized in that** the display instrument (2) displays the quality of the battery.

9. Apparatus according to one of the preceding claims, **characterized in that** the display instrument (2) displays the charge state of the battery.

10. Apparatus according to one of the preceding claims, **characterized in that** the display instrument is actuated by means of the vehicle electronics.

11. Apparatus according to one of the preceding claims, **characterized in that**, in the start mode, the display instrument (2, 3) displays the vehicle function.

## Revendications

1. Dispositif pour un véhicule de tourisme pour indiquer l'état d'une batterie, comprenant un instrument indicateur (2, 3) de l'état de la batterie, l'instrument indicateur étant un instrument indicateur (2, 3) pour indiquer une fonction du véhicule qui indique l'état de la batterie après une commande appropriée, **caractérisé en ce que** le véhicule est équipé d'une fonctionnalité de mode arrêt/démarrage et l'instrument indicateur (2) est configuré pour indiquer, en mode arrêt, l'état de la batterie et/ou le temps restant jusqu'à un démarrage nécessaire du moteur en vue d'obtenir ou de rétablir la charge de la batterie.

2. Dispositif selon la revendication 1, **caractérisé en ce que** l'instrument indicateur est un instrument indicateur gradué mécanique (2, 3).

3. Dispositif selon la revendication 1 ou 2, **caractérisé en ce que** l'instrument indicateur est un instrument rond mécanique (2, 3) comprenant au moins une graduation (8, 10) et une aiguille (9, 11).

4. Dispositif selon l'une des revendications précédentes, **caractérisé en ce que** l'instrument indicateur est un tachymètre (3), un compte-tours (2) ou similaire.

5. Dispositif selon l'une des revendications 2 à 4, **caractérisé en ce que** l'instrument indicateur (2, 3) présente une graduation (8, 10) qui sert à la fois à indiquer l'état de la batterie et la fonction du véhicule.

6. Dispositif selon l'une des revendications 2 à 4, **caractérisé en ce que** l'instrument indicateur présente deux graduations, une graduation pour indiquer l'état de la batterie et une graduation pour la fonction du véhicule.

7. Dispositif selon l'une des revendications 2 à 4, **caractérisé en ce que** l'instrument indicateur présente une graduation variable qui peut être permutée pour indiquer l'état de la batterie ou la fonction du véhicule.

8. Dispositif selon l'une des revendications précédentes, **caractérisé en ce que** l'instrument indicateur (2) indique la qualité de la batterie.

9. Dispositif selon l'une des revendications précédentes, **caractérisé en ce que** l'instrument indicateur (2) indique l'état de charge de la batterie.

10. Dispositif selon l'une des revendications précédentes, **caractérisé en ce que** la commande de l'instrument indicateur s'effectue au moyen de l'électronique du véhicule.

11. Dispositif selon l'une des revendications précédentes, **caractérisé en ce que** l'instrument indicateur (2, 3) en mode démarrage indique la fonction du véhicule.
